# EUROPÄISCHE PATENTANMELDUNG

(11) **EP 4 834 651 A1**
(43) Veröffentlichungstag der Anmeldung: **04.11.2026**
(21) Anmeldenummer: 26170520.6
(22) Anmeldetag: 02.04.2026
(51) Int. Cl.: B60L 58/16, B60L 53/80, B60L 58/12, B60L 58/18, B60L 58/22

(54) **VERFAHREN UND EINE VORRICHTUNG ZUM BETREIBEN EINES BATTERIESYSTEMS MIT MEHREREN BATTERIEPACKS**

(30) Priorität: 30.04.2025 DE 102025116702
(71) Anmelder: MAN Truck & Bus SE, 80995 München (DE)
(72) Erfinder: SCHEIBENBOGEN, PAUL, 80995 München (DE); PRAVIN, ROHIT, 80995 MÜNCHEN (DE)

(57) **Zusammenfassung**

Die Erfindung betrifft u. a. ein Verfahren zum Betreiben eines Batteriesystems (20) für ein Kraftfahrzeug (10), wobei das Batteriesystem (20) mehrere unabhängig voneinander austauschbare Batteriepacks (20a, 20b, 20c) aufweist. Das Verfahren weist ein Festlegen eines, durch einen gemeinsamen oberen Ladezustand (SoCₒ) und einen gemeinsamen unteren Ladezustand (SoCᵤ) begrenzten, gemeinsamen Arbeits-Ladezustands(SoC)-Bereichs für die mehreren Batteriepacks (20a, 20b, 20c) auf. Ferner weist das Verfahren ein Betreiben des Batteriesystems (20) unter Berücksichtigung des festgelegten gemeinsamen Arbeits-SoC-Bereichs auf, vorzugsweise derart, dass das Batteriesystem (20) einen Systemladezustand innerhalb des festgelegten gemeinsamen Arbeits-SoC-Bereichs aufweist.

## Beschreibung

Die Erfindung betrifft ein Verfahren und eine Vorrichtung zum Betreiben eines Batteriesystems für ein Nutzfahrzeug. Ferner betrifft die Erfindung ein entsprechendes Batteriesystem und ein Nutzfahrzeug.

Im Stand der Technik sind Fahrzeuge, die mittels eines Elektromotors zumindest teilweise elektrisch angetrieben werden, grundsätzlich bekannt. Die hierfür notwendige elektrische Energie wird in der Regel von einer Traktionsbatterie des Fahrzeugs bereitgestellt, die eine Vielzahl elektrisch miteinander verschalteter Batteriezellen umfasst.

Während elektrisch angetriebene Personenkraftfahrzeuge in der Regel über eine (einzige) Traktionsbatterie bzw. ein Batteriepack verfügen, weisen Elektronutzfahrzeuge, wie z. B. Elektrolastkraftwagen oder Elektrobusse, aufgrund des größeren Gewichts üblicherweise mehrere, unabhängig voneinander austauschbare Batteriepacks auf.

Aufgrund von fertigungs- und/oder betriebsbedingten Unterschieden altern die verschiedenen Batteriepacks oftmals unterschiedlich schnell, sodass in der Regel Batteriepacks mit unterschiedlichen Alterungszuständen (SoH-Zuständen) gleichzeitig betrieben werden. Da der Alterungszustand Einfluss auf die Speicherkapazität und damit auf die aus den Batteriepacks entnehmbare Energie hat, ergeben sich Herausforderungen hinsichtlich eines möglichst optimalen Betriebs einer solchen Gruppe unterschiedlich gealterter Batteriepacks. Die bisherigen Lösungen liefern hier keine zufriedenstellenden Ergebnisse.

Die Aufgabe der Erfindung besteht darin, eine Lösung für einen verbesserten Betrieb eines Energiespeichersystems für ein Kraftfahrzeug mit mehreren Energiespeichern bereitzustellen, mit der die Nachteile der bisherigen Lösungen vermieden werden können. Bevorzugt ist es eine Aufgabe der Erfindung, eine Lösung bereitzustellen, mit der über die Lebensdauer des Energiespeichersystems hinweg und auch bei einem Austausch einer oder mehrerer Energiespeicher eine möglichst konstante Reichweite des Kraftfahrzeugs erzielt werden kann.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein erster Aspekt der vorliegenden Offenbarung betrifft ein (z. B. computerimplementiertes) Verfahren. Bevorzugt dient das Verfahren zum Betreiben eines elektrischen Energiespeichersystems (z. B. eines Batteriesystems) für ein Kraftfahrzeug (z. B. für ein Nutzfahrzeug). Besonders bevorzugt handelt es sich bei dem Kraftfahrzeug um ein Elektrofahrzeug, insbesondere um ein Elektronutzfahrzeug. Das elektrische Energiespeichersystem (z. B. Batteriesystem) weist mehrere (z. B. separate und/oder unabhängig voneinander austauschbare) elektrische Energiespeicher (z. B. Batteriepacks) auf.

Das Verfahren weist ein (z. B. automatisches) Festlegen (z. B. mittels eines Optimierungsalgorithmus) eines, durch einen gemeinsamen oberen Ladezustand (SoCₒ) und einen gemeinsamen unteren Ladezustand (SoCᵤ) begrenzten, gemeinsamen Arbeits-Ladezustands(SoC)-Bereichs für die mehreren elektrischen Energiespeicher (z. B. für die mehreren Batteriepacks) und/oder das elektrische Energiespeichersystem (z. B. das Batteriesystem) auf. Beispielsweise kann der Arbeits-SoC-Bereich durch den gemeinsamen oberen Ladezustand (z. B. 95 % SoC) nach oben und durch den gemeinsamen unteren Ladezustand (z. B. 15 % SoC) nach unten begrenzt sein. Bevorzugt erfolgt das Festlegen dabei in Abhängigkeit von einer vorgegebenen erzielbaren, z. B. maximalen und/oder mit einer Ladung, d. h. ohne Zwischenladungen, des Energiespeichersystems (z. B. eines Batteriesystems) erzielbaren Reichweite des Kraftfahrzeugs (z. B. Nutzfahrzeugs) und/oder in Abhängigkeit von einem jeweiligen Alterungszustand der mehreren elektrischen Energiespeicher (z. B. der mehreren Batteriepacks) und/oder in Abhängigkeit von einer jeweiligen aktuellen Kapazität der mehreren elektrischen Energiespeicher (z. B. der mehreren Batteriepacks).

Das Verfahren weist weiterhin ein Betreiben des elektrischen Energiespeichersystems (z. B. des Batteriesystems) unter Berücksichtigung des festgelegten gemeinsamen Arbeits-SoC-Bereichs auf, vorzugsweise derart, dass das elektrische Energiespeichersystem (z. B. das Batteriesystem) einen (z. B. aus den Ladezuständen der mehreren elektrischen Energiespeicher bzw. Batteriepacks gebildeten) Systemladezustand innerhalb des festgelegten gemeinsamen Arbeits-SoC-Bereichs aufweist. Beispielsweise kann das Betrieben ein Sicherstellen aufweisen, dass alle elektrischen Energiespeicher (z. B. alle Batteriepacks) jeweils nur Ladezustände innerhalb des gemeinsamen Arbeits-SoC-Bereichs annehmen.

Vorteilhaft kann dadurch ein möglichst lebensdaueroptimierter Betrieb der elektrischen Energiespeicher bzw. Batteriepacks realisiert werden. Die Wahl eines für alle elektrischen Energiespeicher bzw. Batteriepacks gleichen Arbeits-SoC-Bereichs stellt ferner sicher, dass das Energiespeicher- bzw. Batteriesystem nicht unnötig viel in schnell alternden Ladezustandsbereichen betrieben wird bzw. ein schnelles Altern der Energiespeicher bzw. Batteriepacks mit dem höchsten SoH-Level vermieden wird. Weiterhin ermöglicht die Lösung ein Einhalten einer konstanten Reichweite auch nach einem mehrfachen Austausch von Energiespeichern bzw. Batteriepacks.

In einem Ausführungsbeispiel kann das Festlegen nach einem Austausch zumindest eines (z. B. gealterten) elektrischen Energiespeichers (z. B. Batteriepacks) der mehreren elektrischen Energiespeicher (z. B. Batteriepacks) durch einen (z. B. neuen oder "gesünderen") anderen elektrischen Energiespeicher (z. B. ein anderes Batteriepack) wiederholt werden. Der andere elektrische Energiespeicher (z. B. der andere Batteriepack) kann bspw. auch ein gebrauchter (z. B. bereits in einem anderen Kraftfahrzeug betriebener, aber noch funktionsfähiger bzw. gesunder) elektrischer Energiespeicher (z. B. Batteriepack) sein, wobei dieser bevorzugt einen höheren SoH-Wert als der ausgetauschte elektrischen Energiespeichers (z. B. das ausgetauschte Batteriepack) aufweist. Bevorzugt wird das Festlegen dabei unter Berücksichtigung der nach dem Austausch (z. B. aktuell) im elektrischen Energiespeichersystem (z. B. im Batteriesystem) vorhandenen elektrischen Energiespeicher (z. B. Batteriepacks) wiederholt. Beispielsweise kann das Festlegen somit auf Basis der nach dem Austausch bzw. Wechsel im elektrischen Energiespeichersystem (z. B. im Batteriesystem) befindlichen elektrischen Energiespeicher (z. B. Batteriepacks) bzw. deren aktuellen Eigenschaften wiederholt werden. Vorteilhaft kann dadurch ein für die aktuellen Energiespeicher- bzw. Batteriesystemgegebenheiten möglichst passender Arbeits-SoC-Bereich erzielt werden.

In einem weiteren Ausführungsbeispiel kann bei oder vor dem wiederholten Festlegen eine (z. B. mittels eines Schätzers) geschätzte aktuelle Kapazität, eine (z. B. mittels einer Messeinrichtung) gemessene aktuelle Kapazität und/oder eine vorgegebene (z. B. eine empfangene, bspw. zuvor hinterlegte) aktuelle Kapazität des anderen elektrischen Energiespeichers (z. B. des anderen Batteriepacks) berücksichtigt werden. Zum Schätzen bzw. Messen der Kapazität können an sich bekannte Methoden, darunter bspw. Messungen des Innenwiderstands und/oder die Verwendung von Kalman-Filtern, verwendet werden. Vorteilhaft kann dadurch ein an die Performance des neu eingebauten anderen elektrischen Energiespeichers bzw. Batteriepacks angepasster Arbeits-SoC-Bereich erreicht werden.

In einer Ausführungsform kann das Verfahren ferner ein (z. B. kontinuierliches und/oder fortlaufendes) Überwachen von jeweiligen Alterungszuständen (z. B. SoH-Zuständen) der (z. B. aktuell im elektrischen Energiespeichersystem (z. B. im Batteriesystem) vorhandenen) elektrischen Energiespeicher (z. B. Batteriepacks) aufweisen. Beispielsweise kann das Überwachen ein Messen der jeweiligen Alterungszustände (z. B. mittels einer bzw. der Messeinrichtung) und/oder ein Schätzen der jeweiligen Alterungszustände (z. B. mittels eines bzw. des Schätzers) umfassen. Bevorzugt wird das Festlegen des gemeinsamen Arbeits-SoC-Bereichs dabei wiederholt, wenn zumindest einer der überwachten Alterungszustände sich um einen vorbestimmten Schwellenwert (z. B. im Vergleich zu dessen letztmaliger Messung und/oder Schätzung) verändert (hat). Beispielsweise kann das Festlegen des gemeinsamen Arbeits-SoC-Bereichs widerholt werden, wenn einer der überwachten Alterungszustände um 1 % SoH abgesunken ist. Vorteilhaft kann dadurch ein möglichst bedarfsgerechtes Festlegen sichergestellt werden.

Zudem oder alternativ kann das Festlegen, z. B. während des Betriebs des Kraftfahrzeugs (z. B. des Nutzfahrzeugs), in regelmäßigen oder unregelmäßigen Zeitabständen (z. B. alle 5 min) widerholt werden. Bevorzugt werden hierbei jeweils die aktuellen jeweiligen Alterungszustände und/oder aktuellen jeweiligen Kapazitäten der mehreren elektrischen Energiespeicher (z. B. der mehreren Batterie-packs) berücksichtigt. Vorteilhaft kann dadurch ein steuerungstechnisch möglichst einfach umzusetzendes Festlegen erreicht werden.

In einer weiteren Ausführungsform kann das Verfahren ferner ein Ausgeben eines Hinweises, der bevorzugt einen notwendigen Energiespeicheraustausch (z. B. Batteriepacktausch) angibt, aufweisen, wenn einer der mehreren elektrischen Energiespeicher (z. B. eines der mehreren Batteriepacks) einen vorbestimmten (z. B. zuvor festgelegten) Alterungszustand (z. B. State-of-Health-(SoH)-Zustand) erreicht. Vorteilhaft kann dadurch ein Fahrer über die Notwendigkeit einer Wartung des Energiespeicher- bzw. Batteriesystems informiert werden.

Zudem oder alternativ kann das Verfahren ferner ein Ausgeben eines Ladezustandssignals, das bevorzugt einen (z. B. Gesamt-)Ladezustand des elektrischen Energiespeichersystems (z. B. des Batteriesystems) angibt, aufweisen. Beispielsweise kann der (z. B. Gesamt-)Ladezustand ein Maß für die im elektrischen Energiespeichersystem (z. B. im Batteriesystem) insgesamt vorhandene Ladung bzw. Energie sein. Bevorzugt wird dabei ein Ladezustand von 0 % ausgegeben, wenn ein Systemladezustand des elektrischen Energiespeichersystems (z. B. des Batteriesystems), vorzugsweise wenn alle elektrischen Energiespeicher (z. B. Batterie-packs) zugeschaltet bzw. genutzt werden, gleich dem gemeinsamen unteren Ladezustand ist.

Der Systemladezustand kann hierbei z. B. aus den Ladezuständen der mehreren elektrischen Energiespeicher (z. B. der mehreren Batteriepacks) gebildet sein, bspw. durch Mittelung. Zudem oder alternativ kann ein Ladezustand von 100 % ausgegeben werden, wenn der (bzw. ein) Systemladezustand des elektrischen Energiespeichersystems (z. B. des Batteriesystems), vorzugsweise wenn alle elektrischen Energiespeicher (z. B. Batteriepacks) zugeschaltet bzw. genutzt werden, gleich dem gemeinsamen oberen Ladezustand ist. Vorteilhaft kann dadurch ein intuitives Informieren über die tatsächlich nutzbare Ladung im Energiespeicher- bzw. Batteriesystem erreicht werden.

In einer einer Ausführungsvariante kann das Betreiben ein Betreiben des elektrischen Energiespeichersystems (z. B. des Batteriesystems) in mehreren Entlade/Ladezyklen aufweisen, wobei jeder der Entlade/Ladezyklen jeweils (z. B. nur) ein (z. B. gemeinsames) Entladen und (z. B. nur) ein (z. B. gemeinsames) Laden (z. B. aller) der mehreren elektrischen Energiespeicher (z. B. der mehreren Batteriepacks) aufweist. Beispielsweise das Betreiben ein wechselweises gemeinsames Laden und gemeinsames Entladen der mehreren elektrischen Energiespeicher (z. B. der mehreren Batteriepacks) aufweisen.

In einer weiteren Ausführungsvariante kann das Energiespeichersystem (z. B. das Batteriesystem) eine Gesamtnennkapazität von mindestens 200 kWh, vorzugsweise mindestens 300 kWh, besonders bevorzugt mindestens 400 kWh, aufweisen. Vorteilhaft kann dadurch für den Betrieb von Nutzfahrzeugen eine ausreichende Energiemenge bereitgestellt werden.

Zudem oder alternativ können die elektrischen Energiespeicher (z. B. die Batteriepacks) elektrisch parallel miteinander verbunden sein und/oder elektrisch parallel geschaltet sein. Vorteilhaft kann dadurch eine hohe Gesamtkapazität erreicht werden.

Zudem oder alternativ kann jeder der elektrischen Energiespeicher (z. B. jedes der Batterie-packs) ein (z. B. geschlossenes) Gehäuse (z. B. aus Metall und/oder Kunststoff) aufweisen. Vorteilhaft kann dadurch ein einfacher Austausch der elektrischen Energiespeicher bzw. Batteriepacks ermöglicht werden.

Zudem oder alternativ kann jeder der elektrischen Energiespeicher (z. B. jedes der Batterie-packs) eine Vielzahl von (z. B. in mehreren versetzt zueinander angeordneten Ebenen angeordneten) Batteriezellen (z. B. Lithium-Ionen-Batteriezellen) und/oder (z. B. in mehreren versetzt zueinander angeordneten Ebenen angeordneten) Batteriemodulen (z. B. umfassend mehrere Batteriezellen) aufweisen. Bevorzugt sind die Batteriezellen und/oder die Batteriemodule dabei elektrisch in Reihe miteinander verbunden. Vorteilhaft kann dadurch ein ausreichendes Spannungsniveau sichergestellt werden.

Zudem oder alternativ kann jeder der elektrischen Energiespeicher (z. B. jedes der Batterie-packs) eine Nennkapazität von mindestens 50 kWh, vorzugsweise mindestens 65 kWh, besonders bevorzugt mindestens 80 kWh, aufweisen. Vorteilhaft kann dadurch für den Betrieb von Nutzfahrzeugen eine ausreichende Energiemenge bereitgestellt werden.

In einem Ausführungsbeispiel kann der gemeinsame obere Ladezustand kleiner als ein maximaler Ladezustand (SoCₘₐₓ) der elektrischen Energiespeicher (z. B. der Batteriepacks) oder des elektrischen Energiespeichersystems (z. B. des Batteriesystems) sein. Beispielsweise kann der maximale Ladezustand einem vollständigen Aufladen, z. B. einem SoC von 100 %, entsprechen und/oder durch eine (z. B. vom Hersteller vorgegebene) Ladeschlussspannung definiert sein. Bevorzugt ist der gemeinsame obere Ladezustand dabei kleiner als 95 % SoC-ₘₐₓ, besonders bevorzugt kleiner als 85 % SoCₘₐₓ.

Zudem oder alternativ kann der gemeinsame untere Ladezustand größer als ein minimaler Ladezustand (SoCₘᵢₙ) der elektrischen Energiespeicher (z. B. der Batteriepacks) oder des elektrischen Energiespeichersystems (z. B. des Batteriesystems) sein. Beispielsweise kann der minimale Ladezustand einem vollständigen Entladen, z. B. einem SoC von 0%, entsprechen und/oder durch eine (z. B. vom Hersteller vorgegebene) Entladeschlussspannung definiert sein. Bevorzugt ist der gemeinsame untere Ladezustand dabei größer als 5 % SOCₘₐₓ, besonders bevorzugt größer als 10 % SoCₘₐₓ. Vorteilhaft kann dadurch ein möglichst lebensdauerschonender Betrieb der Energiespeicher bzw. Batteriepacks ermöglicht werden.

In einem weiteren Ausführungsbeispiel kann, sobald einer der mehreren elektrischen Energiespeicher (z. B. eines der mehreren Batteriepacks) einen Ladezustand aufweist, der dem gemeinsamen oberen Ladezustand entspricht, das Betreiben ein Unterbinden eines (z. B. weiteren) Ladens des entsprechenden elektrischen Energiespeichers (z. B. des entsprechenden Batteriepacks) aufweisen. Alternativ kann, sobald einer der mehreren elektrischen Energiespeicher (z. B. eines der mehreren Batteriepacks) einen Ladezustand aufweist, der dem gemeinsamen unteren Ladezustand entspricht, das Betreiben ein Unterbinden eines (z. B. weiteren) Entladens des entsprechenden elektrischen Energiespeichers (z. B. des entsprechenden Batteriepacks) aufweisen. Beispielsweise kann das Unterbinden dabei ein Abtrennen des entsprechenden elektrischen Energiespeichers (z. B. des entsprechenden Batteriepacks) von einem Verbraucher oder einer Ladeeinrichtung aufweisen. Vorteilhaft kann dadurch das Einhalten des gemeinsamen Arbeits-SoC-Bereichs sichergestellt werden.

Zudem oder alternativ kann, sobald das elektrische Energiespeichersystem (z. B. das Batteriesystem) einen aus den Ladezuständen der mehreren elektrischen Energiespeicher (z. B. der mehreren Batteriepacks) gebildeten (z. B. gemittelten) Systemladezustand aufweist, der dem gemeinsamen oberen Ladezustand entspricht, das Betreiben ein Unterbinden eines Ladens des elektrischen Energiespeichersystems (z. B. des Batteriesystems) aufweisen. Alternativ kann, sobald das elektrische Energiespeichersystem (z. B. das Batteriesystem) einen aus den Ladezuständen der mehreren elektrischen Energiespeicher (z. B. der mehreren Batteriepacks) gebildeten (z. B. gemittelten) Systemladezustand aufweist, der dem gemeinsamen unteren Ladezustand entspricht, das Betreiben ein Unterbinden eines Entladens des elektrischen Energiespeichersystems (z. B. des Batteriesystems) aufweisen. Beispielsweise kann das Unterbinden dabei ein Abtrennen des elektrischen Energiespeichersystems (z. B. des Batteriesystems) von einem Verbraucher oder einer Ladeeinrichtung aufweisen. Vorteilhaft kann auch dadurch das Einhalten des gemeinsamen Arbeits-SoC-Bereichs sichergestellt werden.

In einer Ausführungsform kann das Festlegen des gemeinsamen Arbeits-SoC-Bereichs in Abhängigkeit von einer vorgegebenen (z. B. maximal und/oder mit einer Ladung des elektrischen Energiespeichersystems bzw. des Batteriesystems erzielbaren und/oder ohne Zwischenladungen des elektrischen Energiespeichersystems bzw. des Batteriesystems) erzielbaren Reichweite des Kraftfahrzeugs (z. B. des Nutzfahrzeugs) und/oder einem jeweiligen Alterungszustand (z. B. SoH-Zustand) der mehreren (bzw. aller) elektrischen Energiespeicher (z. B. der mehreren Batteriepacks) und/oder einem jeweiligen aktuellen Energieinhalt der mehreren (bzw. aller) elektrischen Energiespeicher (z. B. der mehreren Batteriepacks) und/oder einer jeweiligen aktuellen Kapazität der mehreren (bzw. aller) elektrischen Energiespeicher (z. B. der mehreren Batteriepacks) erfolgen. Beispielsweise können eine oder mehrere dieser Größen bei dem Festlegen des gemeinsamen Arbeits-SoC-Bereichs berücksichtigt werden. Vorteilhaft kann dadurch ein möglichst lebensdaueroptimierter Betrieb der elektrischen Energiespeicher bzw. Batteriepacks realisiert werden.

Zudem oder alternativ kann der gemeinsame Arbeits-SoC-Bereich unter Berücksichtigung aller (z. B. aktuell) im elektrischen Energiespeichersystem (z. B. im Batteriesystem) vorhandenen elektrischen Energiespeicher (z. B. Batteriepacks) festgelegt werden, z. B. durch Berücksichtigung mindestens einer Eigenschaft jedes der (z. B. aktuell) im elektrischen Energiespeichersystem (z. B. im Batteriesystem) vorhandenen elektrischen Energiespeicher (z. B. Batteriepacks).

In einer weiteren Ausführungsform kann das Festlegen ein Optimieren des gemeinsamen Arbeits-SoC-Bereichs (z. B. mittels eines Optimierers und/oder eines Optimierungsalgorithmus) hinsichtlich mindestens eines vorgegebenen Optimierungskriteriums erfolgen. Beispielsweise kann das mindestens eine vorgegebene Optimierungskriterium eine möglichst lange Lebensdauer des elektrischen Energiespeichersystems (z. B. des Batteriesystems), ein möglichst kleiner Arbeits- SoC-Bereich und/oder ein möglichst kleiner gemeinsamer oberer Ladezustand sein. Bevorzugt erfolgt das Optimieren ferner hinsichtlich (mindestens) einer vorgegebenen Randbedingung, z. B. in Form einer über die Lebensdauer des elektrischen Energiespeichersystems (z. B. des Batteriesystems) konstanten erzielbaren Reichweite (z. B. 300 km). Vorteilhaft kann dadurch ein besonders passender Arbeits-SoC-Bereich festgelegt werden.

In einer Ausführungsvariante kann das Optimieren mittels eines Optimierungsalgorithmus und/oder mittels eines trainierten künstliche-Intelligenz-Algorithmus erfolgen. Beispielsweise kann hierzu eine dynamische Programmierung, eine Heuristik, ein gradientenbasiertes Newtonverfahren, eine genetische Optimierung, ein neuronales Netz und/oder eine Monte-Carlo-Simulation genutzt werden.

Ein weiterer Aspekt der vorliegenden Offenbarung betrifft eine Vorrichtung zum Betreiben eines elektrischen Energiespeichersystems (z. B. eines Batteriesystems) für ein Kraftfahrzeug (z. B. Nutzfahrzeug). Bevorzugt handelt es sich bei dem Kraftfahrzeug um ein Elektrofahrzeug, insbesondere um ein Elektronutzfahrzeug. Das elektrische Energiespeichersystem (z. B. Batteriesystem) weist dabei mehrere (z. B. separate und/oder unabhängig voneinander austauschbare) elektrische Energiespeicher (z. B. Batteriepacks) auf. Die Vorrichtung kann z. B. Teil bzw. eine Einheit eines Batterie-Management-Systems sein. Die Vorrichtung ist für ein Durchführen eines Verfahrens, wie hierin beschrieben, eingerichtet. Folglich sollen die vorstehend im Zusammenhang mit dem Verfahren offenbarten Merkmale auch im Zusammenhang mit der Vorrichtung offenbart und beanspruchbar sein. Entsprechendes soll auch umgekehrt gelten. Vorteilhaft können mittels der Vorrichtung die gleichen Vorteile erzielt werden, die bereits unter Bezugnahme auf das Verfahren erläutert wurden.

Vorzugsweise weist die Vorrichtung einen (z. B. Daten-)Speicher und einen (z. B. Mikro-)Prozessor auf. Auf dem Speicher können Steuerbefehle zur Durchführung des Verfahrens hinterlegt sein, welche von dem Prozessor abgearbeitet werden können, was die Vorrichtung dazu veranlasst, das Verfahren durchzuführen. Die Vorrichtung kann somit je nach Ausbildung Steuerungsaufgaben und/oder Regelungsaufgaben und/oder Verarbeitungsaufgaben übernehmen.

Weiterhin bevorzugt kann die Vorrichtung eine Kommunikationseinrichtung aufweisen, die für ein (z. B. drahtloses oder kabelgebundenes) Empfangen von Signalen und/oder Informationen (z. B. Ladezuständen, Kapazitäten, Alterungszuständen) eingerichtet ist. Über die Kommunikationseinrichtung können auch Signale (z. B. Steuerbefehle) zum Betreiben des elektrischen Energiespeichersystems, z. B. an die elektrischen Energiespeicher (z. B. an die Batteriepacks) ausgegeben werden.

Ein weiterer Aspekt der vorliegenden Offenbarung betrifft ein elektrisches Energiespeichersystem (z. B. ein Batteriesystem) für ein Kraftfahrzeug (z. B. für ein Nutzfahrzeug). Bevorzugt handelt es sich bei dem Kraftfahrzeug um ein Elektrofahrzeug, insbesondere um ein Elektronutzfahrzeug. Das elektrische Energiespeichersystem weist mehrere (z. B. identische und/oder unabhängig voneinander austauschbare) elektrische Energiespeicher (z. B. Batteriepacks) auf. Weiterhin weist das elektrische Energiespeichersystem (z. B. Batteriesystem) eine Vorrichtung, wie hierin beschrieben, auf. Folglich sollen die vorstehend im Zusammenhang mit der Vorrichtung offenbarten Merkmale auch im Zusammenhang mit dem elektrischen Energiespeichersystem (z. B. Batteriesystem) offenbart und beanspruchbar sein. Entsprechendes soll auch umgekehrt gelten. Die Vorrichtung kann dabei bspw. mit den mehreren elektrischen Energiespeichern (z. B. mit den mehreren Batteriepacks), z. B. elektrisch gekoppelt und/oder verbunden sein.

Ein weiterer Aspekt der vorliegenden Offenbarung betrifft ein Kraftfahrzeug. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein. Das Kraftfahrzeug weist dabei eine Vorrichtung, wie hierin beschrieben, und/oder ein elektrisches Energiespeichersystem (z. B. ein Batteriesystem), wie hierin beschrieben, auf. Folglich sollen die vorstehend im Zusammenhang mit der Vorrichtung bzw. dem elektrischen Energiespeichersystem (z. B. Batteriesystem) offenbarten Merkmale auch im Zusammenhang mit dem Kraftfahrzeug offenbart und beanspruchbar sein. Entsprechendes soll auch umgekehrt gelten.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figur 1: eine schematische Darstellung eines Kraftfahrzeugs gemäß einer Ausführungsform;
- Figur 2: eine schematische Darstellung eines Batteriepacks gemäß einer Ausführungsform;
- Figur 3: eine schematische Explosionsdarstellung des Batteriepacks von Figur 2;
- Figur 4: eine schematische Darstellung eines Verfahrens gemäß einer Ausführungsform; und
- Figur 5: eine schematische Darstellung einer exemplarischen Festlegung eines Arbeits-SoC-Bereichs.

Die in den Figuren dargestellten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

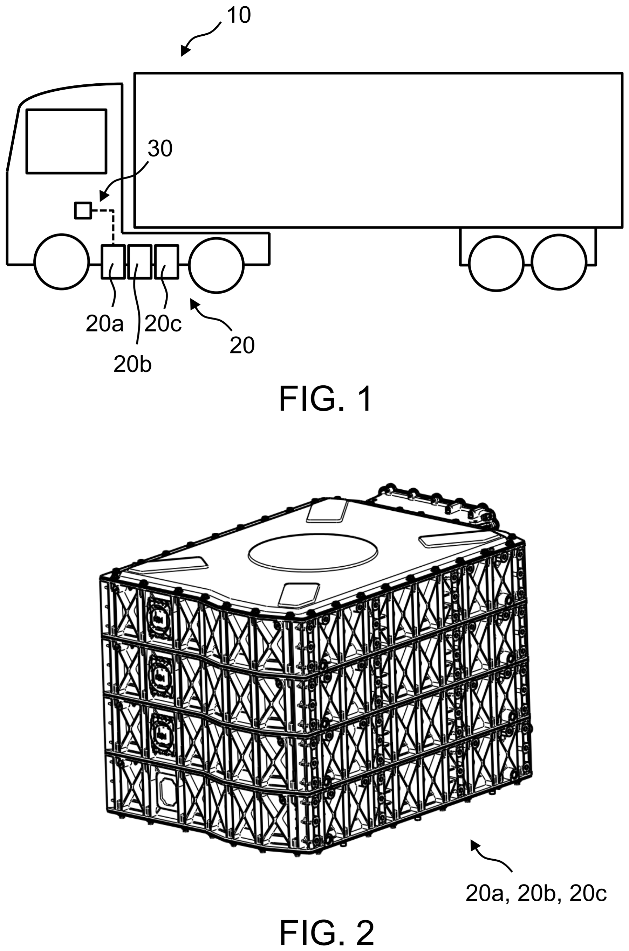

Figur 1 zeigt ein Kraftfahrzeug 10. Das Kraftfahrzeug 10 kann beispielsweise, wie dargestellt, ein Sattelschlepper sein. Bei dem Kraftfahrzeug 10 kann es sich allerdings auch um einen Lastkraftwagen, einen Omnibus, eine Baumaschine oder einen Personenkraftwagen handeln.

Bevorzugt handelt es sich bei dem Kraftfahrzeug 10 um ein Elektrofahrzeug, besonders bevorzugt um ein Elektro-Nutzfahrzeug. Entsprechend kann das Kraftfahrzeug 10 mindestens eine elektrische Antriebseinheit (nicht dargestellt) zum Vortrieb des Kraftfahrzeugs 10, z. B. einen zentralen Elektroantrieb, mehrere Elektroradnabenantriebe oder mehrere radnahe Elektroantriebe, aufweisen.

Wie in Figur 1 dargestellt, weist das Kraftfahrzeug 10 ein Batteriesystem 20 und eine Vorrichtung 30 zum Betreiben des Batteriesystems 20 auf.

Das Batteriesystem 20 dient bevorzugt zum Speichern elektrischer Energie und/oder zum Bereitstellen elektrischer Energie für die mindestens eine elektrische Antriebseinheit. Das Batteriesystem 20 kann über Schaltschütze mit einem Bordnetz des Kraftfahrzeugs 10 verbindbar sein.

Bevorzugt ist das Batteriesystem 20 als Hochvolt-Batteriesystem ausgeführt. Das Hochvolt-Batteriesystem kann z. B. mit einer Gleichspannung zwischen 60 V und 1,5 kV, besonders bevorzugt zwischen 400 V und 850 V, betrieben werden. Besonders bevorzugt handelt es sich bei dem Hochvolt-Batteriesystem um ein 850V-Batteriesystem.

Wie in Figur 1 dargestellt, weist das Batteriesystem 20 mehrere Batteriepacks, vorliegend die Batteriepacks 20a, 20b, 20c, auf. Die Batteriepacks 20a, 20b, 20c können bspw. jeweils identisch ausgebildet sein und, z. B. entlang der Fahrzeuglängsrichtung, verteilt angeordnet sein.

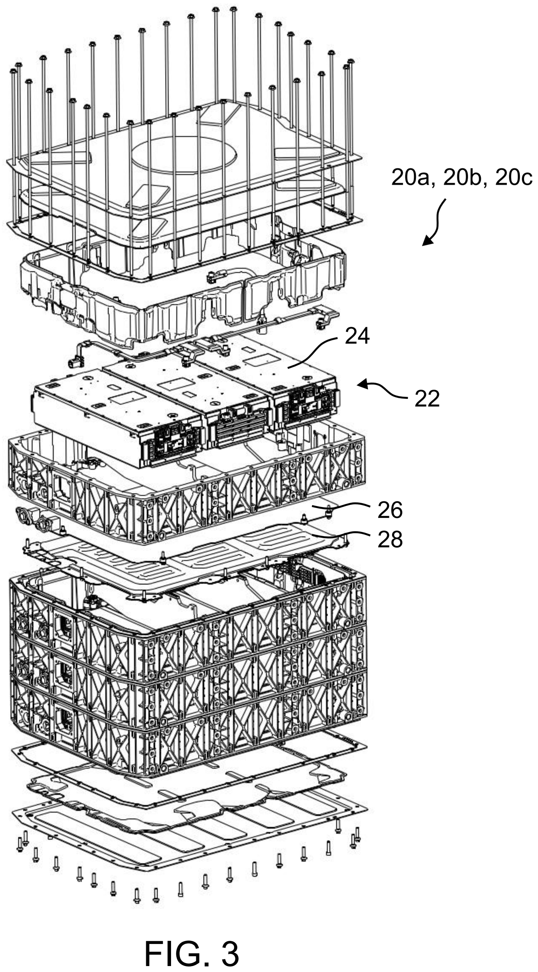

Die Batteriepacks 20a, 20b, 20c können jeweils eine Nennkapazität von mindestens 60 kWh, vorzugsweise mindestens 70 kWh, besonders bevorzugt mindestens 90 kWh, aufweisen. Hierzu können die Batteriepacks 20a, 20b, 20c, wie in Figur 3 exemplarisch dargestellt, mehrere, bspw. zwölf, Batteriemodule 22 mit jeweils mehreren, bspw. fünfzehn, Batteriezellen (z. B. Lithium-Ionen-Batteriezellen) umfassen.

Die Batteriezellen können bspw. als prismatische Batteriezellen ausgebildet sein. Grundsätzlich kann es sich jedoch auch um Rundzellen und/oder Pouch-Zellen handeln. Die Batteriezellen eines jeden Batteriemoduls 22 können elektrisch in Serie verbunden sein und/oder, bspw. mittels eines Rahmens, verspannt sein. Weiterhin können die Batteriemodule 22 jeweils ein Modulgehäuse 24 aufweisen, in dem die Batteriezellen des jeweiligen Batteriemoduls 22 aufgenommen sind. Die Batteriemodule 22 eines jeden Batteriepacks 20a, 20b, 20c können bspw. elektrisch in Reihe geschaltet sein und/oder, wie in Figur 3 dargestellt, in mehreren planparallel versetzt zueinander angeordneten Ebenen angeordnet sein. Zwischen den Ebenen können jeweils Stützplatten 26 und/oder von einem Kühlmedium durchströmbare Kühlplatten 28 angeordnet sein.

Die Batteriepacks 20a, 20b, 20c können elektrisch parallel miteinander verbunden oder verbindbar sein. Insgesamt kann dadurch das Batteriesystem 20 eine Nennkapazität von mindestens 250 kWh, vorzugsweise mindestens 350 kWh, besonders bevorzugt mindestens 450 kWh, aufweisen. Aufgrund von fertigungs- und/oder betriebsbedingten Unterschieden können die Batteriepacks 20a, 20b, 20c während des Betriebs des Kraftfahrzeugs 10 unterschiedlich schnell altern. Beispielsweise können die Batteriepacks 20a, 20b, 20c jeweils einen unterschiedlichen Alterungszustand, vorzugsweise SoH-Zustand, aufweisen. Bevorzugt sind die mehreren Batteriepacks 20a, 20b, 20c deshalb jeweils unabhängig voneinander austauschbar. Beispielsweise kann jedes der Batteriepacks 20a, 20b, 20c dazu, z. B. über Klemm- und/oder Schraubverbinden, mechanisch lösbar am Kraftfahrzeug gehalten sein und/oder, z. B. über Steckverbinden, elektrisch lösbar mit dem Bordnetz des Kraftfahrzeugs 10 verbunden sein.

Für die Batteriepacks 20a, 20b, 20c kann jeweils ein maximaler Alterungszustand bzw. ein minimaler SoH-Wert vorgegeben sein, der bevorzugt nicht über- bzw. unterschritten werden sollte. Beispielsweise kann ein Austausch eines Batteriepacks 20a, 20b, 20c bei 70% SoH vorgesehen sein. Der Alterungs- bzw. SoH-Zustand kann während des Betriebs des Kraftfahrzeugs laufend ermittelt werden, bspw. durch Messung eines Innenwiderstands des jeweiligen Batteriepacks 20a, 20b, 20c oder mittels Schätzverfahren, bspw. auf Basis von Kalman-Filtern. Hat einer der Batteriepacks 20a, 20b, 20c den vorbestimmten Alterungs- bzw. SoH-Zustand erreicht, kann ein Hinweis (z. B. eine Fehlermeldung) ausgegeben werden, dass ein Austausch eines Batteriepacks 20a, 20b, 20c notwendig ist.

Die Vorrichtung 30 kann, wie beispielhaft in Figur 1 dargestellt, als eine zentrale Vorrichtung ausgebildet sein, die allen Batteriepacks 20a, 20b, 20c des Batteriesystems 20 zugeordnet ist. Grundsätzlich kann die Vorrichtung 30 allerdings auch dezentral ausgebildet sein, bspw. in Form mehrerer Module bzw. Einheiten, die bspw. jeweils einem Batteriepack 20a, 20b, 20c zugeordnet sind und miteinander, z.B. über Signalleitungen und/oder einen Datenbus, kommunizieren.

Die Vorrichtung 30 dient zum Betreiben eines Batteriesystems 20. Entsprechend können die Vorrichtung 30 und das Batteriesystem 20 über mindestens eine Signalleitung (gestrichelt dargestellt) miteinander verbunden sein.

Die Vorrichtung 30 kann eine Kommunikationseinrichtung (nicht dargestellt) verfügen, die für ein (z. B. drahtloses oder kabelgebundenes) Empfangen von Signalen und/oder Informationen (z. B. Ladezuständen, Kapazitäten, Alterungszuständen) von dem Batteriesystem 20 eingerichtet ist. Über die Kommunikationseinrichtung können auch Signale (z. B. Steuerbefehle) zum Betreiben des Batteriesystems 20 an das Batteriesystem 20 bzw. die Batteriepacks 20a, 20b, 20c ausgegeben werden.

Weiterhin kann die Vorrichtung 30 über eine entsprechende Elektronik (z. B. ausgeführt als eine Treiberschaltung oder mit Mikroprozessor(en) und Datenspeicher) verfügen. Die Vorrichtung 30 kann dabei als Teil eines Batteriemanagementsystems des Kraftfahrzeugs 10 ausgeführt sein. Vorzugsweise ist die Vorrichtung 30 für ein Durchführen eines Verfahrens, wie hierin offenbart, konfiguriert.

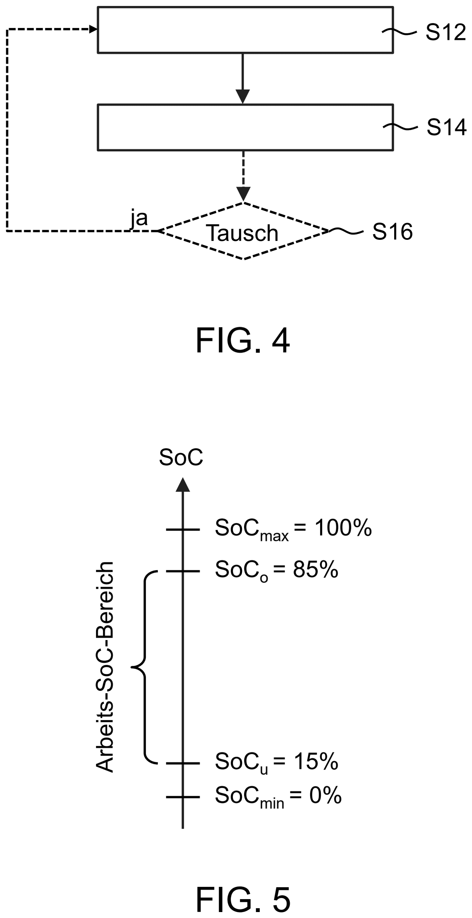

Figur 4 zeigt schematisch ein Verfahren zum Betreiben eines Batteriesystems 20. Das Verfahren kann beispielsweise im Betrieb der Vorrichtung 30 angewendet und/oder durchgeführt werden.

In einem Schritt S12 erfolgt ein Festlegen eines, durch einen gemeinsamen oberen Ladezustand SoCₒ und einen gemeinsamen unteren Ladezustand SoCᵤ begrenzten, gemeinsamen Arbeits-SoC-Bereichs für die mehreren Batteriepacks 20a, 20b, 20c, vgl. auch Figur 5. Der gemeinsame obere Ladezustand SoCₒ kann dabei den Arbeits-SoC-Bereich nach oben, d. h. in Richtung höherer SoC-Werte, begrenzen, während der gemeinsame untere Ladezustand SoCᵤ den Arbeits-SoC-Bereich nach unten, d. h. in Richtung niedrigerer SoC-Werte, begrenzen kann. Bevorzugt gilt der festgelegte gemeinsame Arbeits-SoC-Bereich dabei (gleichzeitig) für alle Batteriepacks 20a, 20b, 20c. Entsprechend sollen die jeweiligen Batteriepacks 20a, 20b, 20c gerade nicht einzelne, voneinander unterschiedliche Arbeits-SoC-Bereiche aufweisen.

Das Festlegen des Arbeits-SoC-Bereichs erfolgt bevorzugt in Abhängigkeit von mindestens einer (aktuellen) Eigenschaft des Batteriesystems 20 und/oder der mehreren Batteriepacks 20a, 20b, 20c, wobei hierbei vorzugsweise alle im Batteriesystem 20 vorhandenen Batterie-packs 20a, 20b, 20c berücksichtigt werden. Beispielsweise kann das Festlegen in Abhängigkeit von einem jeweiligen Alterungszustand der Batteriepacks 20a, 20b, 20c, einem jeweiligen aktuellen Energieinhalt der Batteriepacks 20a, 20b, 20c und/oder einer jeweiligen aktuellen Kapazität der Batteriepacks 20a, 20b, 20c erfolgen. Zudem oder alternativ kann auch eine vorgegebene (maximal) erzielbare Reichweite des Kraftfahrzeugs 10 bei dem Festlegen berücksichtigt werden.

Bevorzugt erfolgt das Festlegen des Arbeits-SoC-Bereichs (z. B. automatisiert) mittels eines, bspw. einen Optimierungsalgorithmus implementierenden, Optimierers. Hierzu kann bspw. eine Kostenfunktion vorgegeben werden, die z. B. die jeweiligen Alterungszustände der Batteriepacks 20a, 20b, 20c, die jeweiligen aktuellen Energieinhalte der Batteriepacks 20a, 20b, 20c und/oder die jeweiligen aktuellen Kapazitäten der Batteriepacks 20a, 20b, 20c berücksichtigen kann. Bevorzugt wird weiterhin die Randbedingung gestellt, dass die erzielbare Reichweite des Kraftfahrzeugs 10 - bspw. unter der Annahme, dass gealterte Batteriepacks 20a, 20b, 20c (z. B. Batteriepacks 20a, 20b, 20c, die 70 % SoH erreichen) durch neue oder "gesündere", d. h. jeweils einen höheren SoH-Wert aufweisende, Batteriepacks 20a, 20b, 20c ersetzt werden - während des Betriebs möglichst konstant sein sollte. Hierbei können bspw. auch Fahrzeuggrößen, wie z. B. Wirkungsgrad und/oder Leistung der mindestens einen elektrischen Antriebseinheit, berücksichtigt werden.

Mittels des Optimierers kann sodann die Kostenfunktion hinsichtlich eines vorgegebenen Optimierungskriteriums, bspw. hinsichtlich eines möglichst lebensdauerschonenden Betriebs des Batteriesystems 20 und/oder hinsichtlich eines möglichst kleinen Arbeits-SoC-Bereichs, optimiert werden. Hierfür kann eine im Stand der Technik grundsätzliche Methode genutzt werden, bspw. eine dynamische Programmierung, eine Heuristik, ein gradientenbasiertes Newtonverfahren, eine genetische Optimierung, ein neuronales Netz und/oder eine Monte-Carlo-Simulation.

Alternativ zu einem gezielten Optimieren des Arbeits-SoC-Bereichs kann das Festlegen des Arbeits-SoC-Bereichs jedoch auch auf Basis (fest) vorgegebener, z. B. durch Vorversuche ermittelter, Umsetzungstabellen und/oder Kennfelder erfolgen, wobei hier bevorzugt wiederum mindestens eine Eigenschaft der Batteriepacks 20a, 20b, 20c, z. B. die jeweiligen Alterungszustände der Batteriepacks 20a, 20b, 20c, die jeweiligen aktuellen Energieinhalte der Batteriepacks 20a, 20b, 20c und/oder die jeweiligen aktuellen Kapazitäten der Batteriepacks 20a, 20b, 20c berücksichtigt werden kann.

Bevorzugt ist der festgelegte gemeinsame obere Ladezustand SoCₒ dabei kleiner als ein maximaler Ladezustand SoCₘₐₓ der Batteriepacks 20a, 20b, 20c bzw. des Batteriesystems 20. Weiterhin bevorzugt ist der gemeinsame untere Ladezustand SoCᵤ größer als ein minimaler Ladezustand SoCₘᵢₙ der Batteriepacks 20a, 20b, 20c bzw. des Batteriesystems 20. Der SoCₘₐₓ und SoCₘᵢₙ können dabei einen (z. B. vom Hersteller vorgegebenen) grundsätzlich nutzbaren Ladebereich definieren, in welchem die Batteriepacks 20a, 20b, 20c bzw. das Batteriesystem 20 ohne Schäden betrieben werden können. Beispielsweise können SoCₘₐₓ einem nominell vollständigen Aufladen, d. h. einem SoC von 100 %, und SoCₘᵢₙ einem nominell vollständigen Entladen, d. h. einem SoC von 0 %, der Batteriepacks 20a, 20b, 20c bzw. des Batteriesystems 20 entsprechen.

Wie beispielhaft in Figur 5 dargestellt, wird der Arbeits-SoC-Bereich bzw. SoCₒ und SoCᵤ bevorzugt so festgelegt, dass der Arbeits-SoC-Bereich von SoCₘₐₓ und SoCₘᵢₙ beabstandet ist und die Grenzwerte SoCₘₐₓ und SoCₘᵢₙ gerade nicht enthält. Bevorzugt wird SoCₒ dabei so festgelegt, dass SoCₒ kleiner als 90 % SOCₘₐₓ ist und/oder SoCᵤ so festgelegt, dass SoCᵤ größer als 7 % SoCₘₐₓ ist. Beispielsweise kann der Arbeits-SoC-Bereich einen Bereich von 65 % SoC abdecken und sich zwischen 15 % SoCₘₐₓ und 80 % SoCₘₐₓ erstrecken. Entsprechend kann durch den festgelegten Arbeits-SoC-Bereich nur ein Teil der grundsätzlich nutzbaren Ladezustände ausgewählt werden.

In einem Schritt S14 erfolgt anschließend ein Betreiben des Batteriesystems 20 unter Berücksichtigung des festgelegten gemeinsamen Arbeits-SoC-Bereichs. Bevorzugt erfolgt das Betreiben dabei derart, dass die jeweiligen Batteriepacks 20a, 20b, 20c jeweils nur Ladezustände innerhalb des festgelegten gemeinsamen Arbeits-SoC-Bereichs aufweisen und/oder ein aus den Ladezuständen aller Batteriepacks 20a, 20b, 20c gebildeter (z. B. gemittelter) Systemladezustand innerhalb des gemeinsamen Arbeits-SoC-Bereichs liegt.

Beispielsweise kann, sobald eines der mehreren Batteriepacks 20a, 20b, 20c einen Ladezustand von SoCₒ oder SoCᵤ aufweist, das Betreiben ein Unterbinden eines weiteren Ladens bzw. Entladens des entsprechenden Batteriepacks 20a, 20b, 20c aufweisen. Entsprechend kann beim Betreiben, z. B. durch ein entsprechendes Überwachen der Ladezustände, sichergestellt werden, dass die mehreren Batteriepacks 20a, 20b, 20c jeweils nur Ladezustände innerhalb des Arbeits-SoC-Bereichs aufweisen.

Das Betreiben kann dabei ein Betreiben des Batteriesystems 20 in mehreren Entlade/Ladezyklen aufweisen, wobei jeder der Entlade/Ladezyklen jeweils ein (gleichzeitiges) Entladen der Batteriepacks 20a, 20b, 20c und ein (gleichzeitiges) Laden der Batteriepacks 20a, 20b, 20c aufweist. Das Entladen kann hierbei bspw. durch ein Versorgen der mindestens einen elektrischen Antriebseinheit mit elektrischer Energie durch das Batteriesystem 20 erfolgen, während das Laden durch Anschließen des Kraftfahrzeugs 10 bzw. des Batteriesystems 20, bspw. über eine entsprechende Kabelverbindung, an eine fahrzeugexterne Ladeeinrichtung (z. B. eine Ladesäule) erfolgen kann. Das Betreiben kann dabei ein Betreiben des Batteriesystems 20 über mehrere Monate und/oder Jahre umfassen.

Da, wie vorstehend erwähnt, die Batteriepacks 20a, 20b, 20c während des Betriebs altern und nacheinander oder gleichzeitig durch neue oder einen besseren SoH-Wert aufweisende Batteriepacks 20a, 20b, 20c ersetzt werden müssen, kann das Verfahren ferner einen optionalen Abfrageschritt S16 vorsehen. Im Schritt S16 kann geprüft werden, ob ein Austausch zumindest eines Batteriepacks 20a, 20b, 20c durch ein anderes Batteriepack 20a, 20b, 20c erfolgt ist. Der Austausch kann dabei einen Ausbau des entsprechenden Batteriepacks 20a, 20b, 20c aus dem Kraftfahrzeug 10 und einen Einbau des anderen Batteriepacks 20a, 20b, 20c umfassen. Dass eines der Batteriepacks 20a, 20b, 20c getauscht wurde, kann dabei bspw. anhand entsprechender Eingaben durch das Werkstattpersonal in einem Fahrzeugspeicher, anhand eines sprunghaften Wechsels des SoH-Werts und/oder durch Abrufen entsprechender Identifikationsinformationen der Batteriepacks 20a, 20b, 20c erfolgen.

Falls ein Austausch festgestellt wurde, kann das Festlegen (S12), vorzugsweise automatisch, wiederholt werden, wobei bevorzugt die geänderte bzw. aktuelle Zusammensetzung des Batteriesystems 20 berücksichtigt wird. Entsprechend kann ein neuer Arbeits-SoC-Bereich für das durch den Austausch geänderte Batteriesystem 20 festgelegt werden, wobei die nun im Batteriesystem 20 befindlichen Batteriepacks 20a, 20b, 20c berücksichtigt werden.

Da beim Tausch mitunter auch nicht komplett neue Batteriepacks 20a, 20b, 20c, sondern auch Batteriepacks 20a, 20b, 20c mit einem SoH < 100 % verbaut werden können, kann vor oder beim Festlegen des Arbeits-SoC-Bereichs nach einem Tausch ferner eine aktuelle Kapazität des anderen Batteriepacks 20a, 20b, 20c gemessen, geschätzt und/oder abgerufen werden. Beispielsweise kann die aktuelle Kapazität mittels einer (z. B. Kapazitäts-)Messeinrichtung der Vorrichtung 30 gemessen werden, z. B. basierend auf einer Erfassung des Innenwiderstands des anderen Batteriepacks 20a, 20b, 20c. Zudem oder alternativ kann die aktuelle Kapazität mittels eines Schätzers, z. B. basierend auf Kalman-Filtern, geschätzt werden und/oder von einer Eingabeeinrichtung, bspw. nach einer entsprechenden manuellen Eingabe, empfangen werden.

Weiterhin kann das Festlegen (S12) während des Betriebs des Nutzfahrzeugs regelmäßig, d. h. in regelmäßigen Zeitabständen, wiederholt werden, z. B. auch ohne dass ein Austausch vorgenommen wurde. Bevorzugt wird hierbei jeweils ein aktueller Wert der jeweiligen mindestens einen Eigenschaft der Batteriepacks 20a, 20b, 20c, z. B. die jeweiligen Alterungszustände der Batteriepacks 20a, 20b, 20c, die jeweiligen aktuellen Energieinhalte der Batteriepacks 20a, 20b, 20c und/oder die jeweiligen aktuellen Kapazitäten der Batteriepacks 20a, 20b, 20c berücksichtigt. Entsprechend kann während des Betriebs ein Anpassen des gemeinsamen Arbeits-SoC-Bereichs an den aktuellen Alterungszustand des Batteriesystems 20 erfolgen. Beispielsweise kann mit steigendem Alterungszustand des Batteriesystems 20 der Arbeits-SoC-Bereichs ausgeweitet werden und/oder der gemeinsame obere Ladezustand SoCₒ erhöht und/oder der gemeinsamen unteren Ladezustand SoCᵤ abgesenkt werden.

Insgesamt kann somit auch nach einem oder mehreren Ersetzungen von Batteriepacks 20a, 20b, 20c eine konstante Reichweite des Kraftfahrzeugs 10 bzw. des Batteriesystems 20 erreicht werden. Weiterhin ist nach einem Batteriepacktausch keine Umparametrierung der Batteriesoftwareparameter durch Werkstattpersonal erforderlich. Das Konzept stellt weiterhin sicher, dass die Batteriepacks 20a, 20b, 20c vor und nach einem Tausch lebensdaueroptimiert betrieben werden und die konstante Reichweite über die Lebensdauer des Batteriesystems 20 eingehalten werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen

### Bezugszeichenliste

- 10: Kraftfahrzeug
- 20: Batteriesystem
- 20a, 20b, 20c: Batteriepack
- 22: Batteriemodul
- 24: Modulgehäuse
- 26: Stützplatte
- 28: Kühlplatte
- 30: Vorrichtung zum Betreiben eines Batteriesystems
- SoCₘₐₓ: Maximaler Ladezustand
- SoCₘᵢₙ: Minimaler Ladezustand
- SoCₒ: Oberer Ladezustand
- SoCᵤ: Unterer Ladezustand

## Patentansprüche

1. Verfahren zum Betreiben eines Batteriesystems (20) für ein Nutzfahrzeug (10), wobei das Batteriesystem (20) mehrere unabhängig voneinander austauschbare Batteriepacks (20a, 20b, 20c) aufweist, wobei das Verfahren aufweist:
Festlegen, vorzugsweise automatisches Festlegen, eines, durch einen gemeinsamen oberen Ladezustand (SoCₒ) und einen gemeinsamen unteren Ladezustand (SoCᵤ) begrenzten, gemeinsamen Arbeits-Ladezustands(SoC)-Bereichs für die mehreren Batteriepacks (20a, 20b, 20c), vorzugsweise in Abhängigkeit einer vorgegebenen erzielbaren Reichweite des Nutzfahrzeugs (10);
Betreiben des Batteriesystems (20) unter Berücksichtigung des festgelegten gemeinsamen Arbeits-SoC-Bereichs, vorzugsweise derart, dass das Batteriesystem (20) einen Systemladezustand innerhalb des festgelegten gemeinsamen Arbeits-SoC-Bereichs aufweist.

2. Verfahren nach Anspruch 1, wobei:
das Festlegen nach einem Austausch zumindest eines, vorzugsweise gealterten, Batteriepacks (20a, 20b, 20c) der mehreren Batteriepacks (20a, 20b, 20c) durch einen, vorzugsweise neuen, anderen Batteriepacks (20a, 20b, 20c) wiederholt wird, vorzugsweise unter Berücksichtigung der nach dem Austausch im Batteriesystem (20) vorhandenen Batteriepacks (20a, 20b, 20c).

3. Verfahren nach Anspruch 2, wobei:
beim wiederholten Festlegen eine, vorzugsweise mittels eines Schätzers, geschätzte aktuelle Kapazität, eine, vorzugsweise mittels einer Messeinrichtung, gemessene aktuelle Kapazität und/oder eine vorgegebene aktuelle Kapazität des anderen Batterie-packs (20a, 20b, 20c) berücksichtigt wird.

4. Verfahren nach einem der vorherigen Ansprüche, wobei:
das Verfahren ferner ein Überwachen von jeweiligen Alterungszuständen der Batteriepacks (20a, 20b, 20c) aufweist, und das das Festlegen wiederholt wird, wenn zumindest einer der überwachten Alterungszustände sich um einen vorbestimmten Schwellenwert verändert; und/oder
das Festlegen in regelmäßigen Zeitabständen widerholt wird.

5. Verfahren nach einem der vorherigen Ansprüche, ferner aufweisend:
Ausgeben eines Hinweises, der einen notwendigen Energiespeicheraustausch angibt, wenn eines der mehreren Batteriepacks (20a, 20b, 20c) einen vorbestimmten Alterungszustand, vorzugsweise State-of-Health-(SOH)-Zustand, erreicht; und/oder
Ausgeben eines Ladezustandssignals, das einen Ladezustand des Batteriesystems (20) angibt, wobei, wenn ein Systemladezustand des Batteriesystems (20) gleich dem gemeinsamen unteren Ladezustand (SoCᵤ) ist, ein Ladezustand von 0 % ausgegeben wird und, wenn der Systemladezustand des Batteriesystems (20) gleich dem gemeinsamen oberen Ladezustand (SoCₒ) ist, ein Ladezustand von 100 % ausgegeben wird.

6. Verfahren nach einem der vorherigen Ansprüche, wobei:
das Betreiben ein Betreiben des Batteriesystems (20) in mehreren Entlade/Ladezyklen aufweist, wobei jeder der Entlade/Ladezyklen jeweils ein Entladen und ein Laden der mehreren Batteriepacks (20a, 20b, 20c) aufweist.

7. Verfahren nach einem der vorherigen Ansprüche, wobei:
das Batteriesystem (20) eine Gesamtnennkapazität von mindestens 200 kWh, vorzugsweise mindestens 300 kWh, besonders bevorzugt mindestens 400 kWh, aufweist; und/oder
die Batteriepacks (20a, 20b, 20c) elektrisch parallel miteinander verbunden sind; und/oder
jedes der Batteriepacks (20a, 20b, 20c) aufweist:
- ein, vorzugsweise geschlossenes, Gehäuse; und/oder
- eine Vielzahl von, vorzugsweise in mehreren planparallel versetzt zueinander angeordneten Ebenen angeordneten, Batteriezellen und/oder Batteriemodulen (22); und/oder
- eine Nennkapazität von mindestens 50 kWh, vorzugsweise mindestens 65 kWh, besonders bevorzugt mindestens 80 kWh, aufweisen.

8. Verfahren nach einem der vorherigen Ansprüche, wobei:
der gemeinsame obere Ladezustand (SoCₒ) kleiner als ein maximaler Ladezustand, SoCₘₐₓ, der Batteriepacks (20a, 20b, 20c) oder des Batteriesystems (20), vorzugsweise kleiner als 95 % SoCₘₐₓ, besonders bevorzugt kleiner als 85 % SoCₘₐₓ, ist; und/oder
der gemeinsame untere Ladezustand (SoCᵤ) größer als ein minimaler Ladezustand, SoCₘᵢₙ, der Batteriepacks (20a, 20b, 20c) oder des Batteriesystems (20), vorzugsweise größer als 5 % SoCₘₐₓ, besonders bevorzugt größer als 10 % SoCₘₐₓ, ist.

9. Verfahren nach einem der vorherigen Ansprüche, wobei:
sobald einer der mehreren Batteriepacks (20a, 20b, 20c) einen Ladezustand aufweist, der dem gemeinsamen oberen Ladezustand (SoCₒ) oder dem gemeinsamen unteren Ladezustand (SoCᵤ) entspricht, das Betreiben ein Unterbinden eines Ladens oder Entladens des entsprechenden Batteriepacks (20a, 20b, 20c) aufweist; und/oder
sobald das Batteriesystem (20) einen aus den Ladezuständen der mehreren Batteriepacks (20a, 20b, 20c) gebildeten Systemladezustand aufweist, der dem gemeinsamen oberen Ladezustand (SoCₒ) oder dem gemeinsamen unteren Ladezustand (SoCᵤ) entspricht, das Betreiben ein Unterbinden eines Ladens oder Entladens des Batteriesystems (20) aufweist.

10. Verfahren nach einem der vorherigen Ansprüche, wobei:
das Festlegen des gemeinsamen Arbeits-SoC-Bereichs in Abhängigkeit einer vorgegebenen erzielbaren Reichweite des Nutzfahrzeugs (10), einem jeweiligen Alterungszustand der mehreren Batteriepacks (20a, 20b, 20c), einem jeweiligen aktuellen Energieinhalt der mehreren Batteriepacks (20a, 20b, 20c) und/oder einer jeweiligen aktuellen Kapazität der mehreren Batteriepacks (20a, 20b, 20c), erfolgt; und/oder
der gemeinsame Arbeits-SoC-Bereich unter Berücksichtigung aller im Batteriesystem (20) vorhandenen Batteriepacks (20a, 20b, 20c) festgelegt wird.

11. Verfahren nach einem der vorherigen Ansprüche, wobei:
das Festlegen ein Optimieren des gemeinsamen Arbeits-SoC-Bereichs hinsichtlich mindestens eines vorgegebenen Optimierungskriteriums, vorzugsweise hinsichtlich einer möglichst langen Lebensdauer des Batteriesystems (20), eines möglichst kleinen Arbeits-SoC-Bereichs und/oder eines möglichst kleinen gemeinsamen oberen Ladezustands (SoCₒ), erfolgt, wobei vorzugsweise als Randbedingung eine über die Lebensdauer des Batteriesystems (20) konstante erzielbare Reichweite vorgegeben wird.

12. Verfahren nach Anspruch 11, wobei:
das Optimieren mittels eines Optimierungsalgorithmus und/oder mittels eines trainierten künstliche-Intelligenz-Algorithmus erfolgt.

13. Vorrichtung (30) zum Betreiben eines Batteriesystems (20) für ein Nutzfahrzeug (10), wobei das Batteriesystem (20) mehrere unabhängig voneinander austauschbare Batterie-packs (20a, 20b, 20c) aufweist, wobei die Vorrichtung (30) für ein Durchführen eines Verfahrens nach einem der vorherigen Ansprüche eingerichtet ist.

14. Batteriesystem (20) für ein Nutzfahrzeug (10), aufweisend:
mehrere unabhängig voneinander austauschbare Batteriepacks (20a, 20b, 20c); und
eine Vorrichtung (30) nach Anspruch 13.

15. Nutzfahrzeug (10), aufweisend:
eine Vorrichtung (30) nach Anspruch 13; und/oder
ein Batteriesystem (20) nach Anspruch 14.
